# EUROPÄISCHE PATENTSCHRIFT

(11) **EP 0 818 666 B1**
(45) Veröffentlichungstag und Bekanntmachung des Hinweises auf die Patenterteilung: **02.10.2002**
(21) Anmeldenummer: 97111154.7
(22) Anmeldetag: 03.07.1997
(51) Int. Cl.: G01B 7/30, G01D 5/165, H01C 10/32

(54) **Widerstandsdrehsensor**
Variable resistance rotation sensor
Capteur résistif variable de rotation

(30) Priorität: 09.07.1996 DE 19627556
(43) Veröffentlichungstag der Anmeldung: 14.01.1998
(73) Patentinhaber: Hella KG Hueck & Co., 59552 Lippstadt (DE)
(72) Erfinder: Kleibömer, Susanne, 59557 Lippstadt (DE)

(56) Entgegenhaltungen:
- DE-A- 3 640 110
- DE-C- 19 544 997
- DE-U- 29 611 890
- GB-A- 2 160 367
- US-A- 4 523 373
- US-A- 5 271 269

## Beschreibung

Die Erfindung betrifft einen Widerstandsdrehsensor mit einem Schleiferträger, der auf den Endabschnitt einer Welle aufgedrückt ist, mit einer Leiterplatte, auf der Widerstandbahnen aufgebracht sind, und die dem Schleiferträger gegenüber angeordnet ist, und mit einem Gehäuseteil, welches eine Bezugsebene ausbildet,auf der die Leiterplatte aufliegt, sowie ein Verfahren zur Justierung eines solchen Widerstandsdrehsensors.

Ein solcher Widerstandsdrehsensor ist aus der deutschen Patentschrift DE 36 40 110 C2 bekannt, wobei hier das Widerstandsbahnen tragende Substrat vom Gehäusedeckel über eine Gummidichtung gegen die Fläche eines Gehäuseteils gedrückt und so positioniert wird. In dem Gehäuseteil ist ebenfalls die den Schleiferträger antreibende Welle gelagert. Nachteilig bei dieser Anordnung ist, daß Toleranzen in der Ausbildung des Gehäuseteils und des Schleiferträgers einen Einfluß auf den Abstand zwischen dem Schleiferträger und den Widerstandsbahnen auf dem Substrat haben. Für eine gute Kontaktgabe ist dieser Abstand aber sehr genau einzuhalten, damit die Schleiffedern weder unzulässig verformt werden, noch soweit von den Widerstandsbahnen entfernt sind, daß Unterbrechungen bei der Kontaktgabe auftreten können.

In der GB-A-2160367 wird dieser Abstand mit Hifte - einer schraube geändert.

Es ist daher die Aufgabe der Erfindung, einen einfachen und kostengünstigen Widerstandsdrehsensor zu schaffen, bei dem dieser Abstand sehr genau eingehalten wird. Eine weiterführende Aufgabe der Erfindung ist es, ein Verfahren zur genauen Eistellung des Abstandes zwischen Schleiferträger und Widerstandsbahnen anzugeben.

Diese Aufgaben werden durch die kennzeichnenden Merkmale der Ansprüche 1 und 5 gelöst.

Die Ausbildung derartiger Verbindungselemente zwischen einem Schleiferträger und einer Welle sind ausführlich in der nicht vorveröffentlichten deutschen Patentanmeldung DE 195 44 997 beschrieben. Diese Verbindungselemente sind vorteilhafterweise so ausgestaltet, daß diese in radialer Richtung Nocken und Nuten aufweisen und eines der Verbindungselemente zusätzliche Hinterschnitte aufweist, welche sich in das weichere Material des anderen Verbindungselementes zur formschlüssigen Sicherung der Verbindungselemente eindrückt.

Besonders vorteilhaft ist, den Abstand des Schleiferträgers relativ zu einer Bezugsebene des Gehäuseteils zu justieren, welche beim fertigmontiertem Widerstandsdrehsensor als Auflagefläche für die mit Widerstandsbahnen versehene Leiterplatte dient. Eine solche Bezugsebene kann auf einfache Weise durch Anformungen am Gehäuseteil ausgebildet werden.

Das Verfahren zur Justierung des Schleiferträgers, relativ zur Bezugsebene, erfolgt auf einfache Weise dadurch, daß unter Zuhilfenahme einer geeigneten Abstandsmeßvorrichtung das Verbindungselement des Schleiferträgers soweit in das Verbindungselement der Welle eingedrückt wird, bis die Abstandsmessvorrichtung das vorgegebene Abstandsmaß registriert.

Die Abstandsmeßvorrichtung kann dabei vorteilhafterweise als elektrische Vorrichtung ausgebildet sein, die das Einsetzen oder die Unterbrechung des Stromflusses durch die Schleiffedern des Schleiferträgers registriert.

Als Abstandsmeßvorrichtung kann aber auch eine mechanische Abstandslehre vorgesehen sein. Hierbei dient die Abstandsmeßvorrichtung vorteilhafterweise gleichzeitig als Justiervorrichtung.

Im folgenden soll ein Ausführungsbeispiel eines erfindungsgemäßen Widerstandsdrehsensors anhand der Zeichnungen näher erläutert werden.

Es zeigen
- Figur 1: das geöffnete Gehäuseteil
- Figur 2: das innere des weiteren Gehäuseteils (Gehäusedeckel )
- Figur 3: eine Schnittzeichnung durch das Gehäuseteil und den Gehäusedeckel vor dem Zusammenfügen derselben.

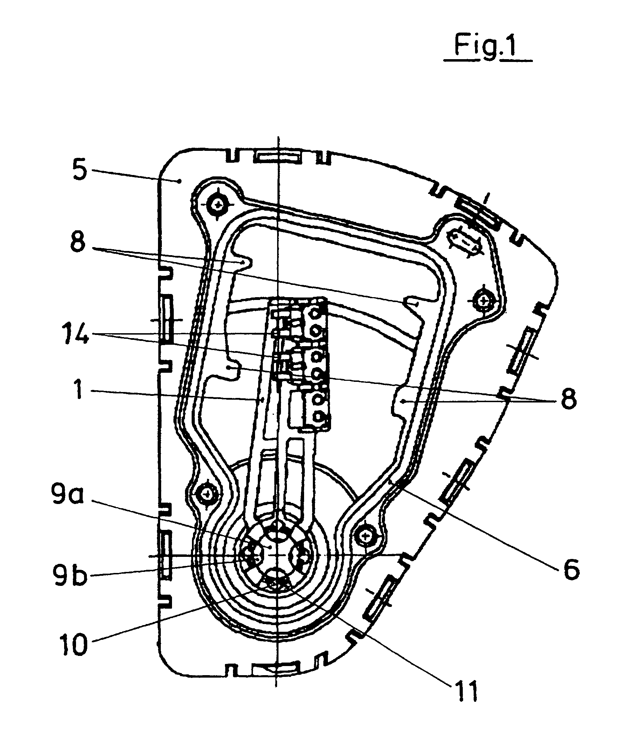

Die Figur 1 zeigt einen Blick auf das geöffnete Gehäuseteil (5), in welchem ein hebelartig ausgebildeter Schleiferträger (1) angeordnet ist. Der Schleiferträger (1) weist in seinem unteren Bereich ein Verbindungselement (9a) auf, welches mit dem Verbindungselement (9b) der hier nicht dargestellten Welle des Sensor sowohl in kraft - als auch in formschlüssiger Verbindung steht. Die Verbindungselemente (9a,9b) sind als im Preßsitz ineinandergefügte, konzentrische Hülsen ausgebildet ( kraftschlüssige Verbindung ), die zum Schutz gegen Verdrehen relativ zueinander, ineinander greifende Nocken (10) und Nuten (11) aufweisen ( formschlüssige Verbindung ).

Die Nocken (10) und/oder Nuten (11) weisen zudem in der Figur 1 nicht dargestellte Hinterschnitte auf. Hierdurch können die Verbindungselemente mit einem gewissen Kraftaufwand in axialer Richtung ineinandergedrückt und so relativ zueinander genau positioniert werden, wobei sich die Materialien der Verbindungselemente (9a,9b) soweit ineinander verkrallen, daß ohne eine weitere axiale Krafteinwirkung eine weitere Verschiebung ausgeschlossen ist.

An seinem entgegengesetztem Abschnitt weist der Schleiferträger (1) mehrere Schleiffedern (14) auf. Um den Schleiferträger (1) herum ist ein umlaufender Rand (6) angeordnet, der in Richtung senkrecht zur Zeichenebene den Schleiferträger (1)( abgesehen von den Schleiffedern 14 ) überragt.

Der umlaufende Rand bildet mehrere Anformungen (8) aus, deren miteinander verbunden gedachte Oberflächen eine Bezugsebene definieren.

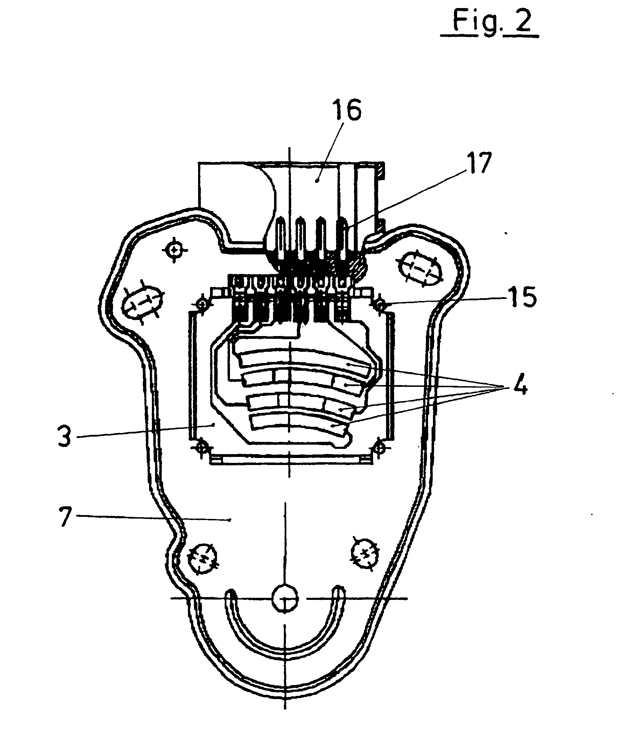

Im montierten Zustand des Widerstandsdrehsensors ist mit dem umlaufenden Rand (6) der Gehäusedeckel (7) verschraubt, dessen Innenseite in der Figur 2 dargestellt ist.

Auf dieser Innenseite des Gehäusedeckels (7) ist eine Leiterplatte (3) angeordnet, die mehrere Widerstandsbahnen (4) trägt. Die Leiterplatte (3) wird durch mehrere Haltestifte (15) auf dem Gehäusedeckel (7) fixiert. Die Widerstandsbahnen (4) stehen über Leiterbahnen in elektrischer Verbindung mit den Kontaktfedern (17) eines Flachsteckverbinders (16).

Die Leiterplatte (3) ist gegenüber der umliegenden Gehäusedeckelinnenfläche erhöht angeordnet, so daß beim Zusammenfügen des Gehäusedeckels (7) mit dem in der Figur 1 gezeigten Gehäuseteil (5) die Leiterplatte (3) fest auf den Anformungen (8) aufliegt und zwischen dem Gehäuseteil (5) und dem Gehäusedeckel (7) fest klemmend gehalten wird.

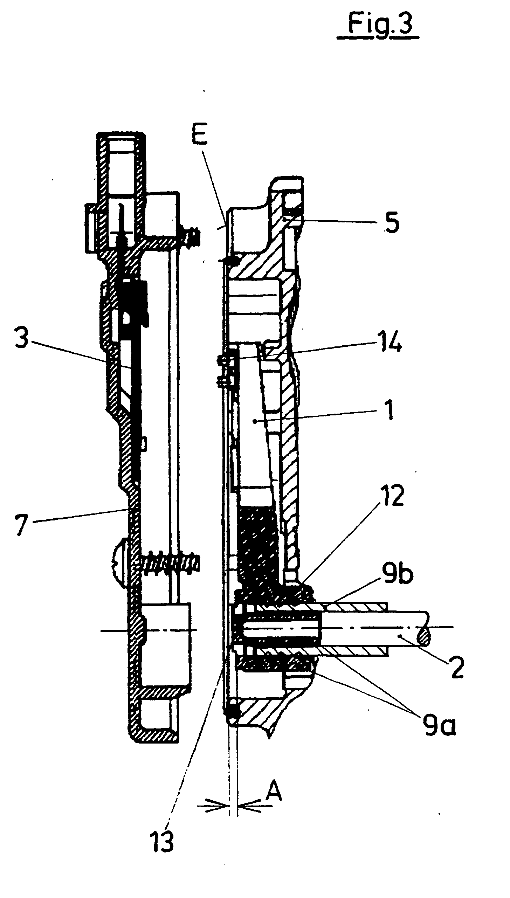

Vorteilhafterweise kann bereits vor dem Zusammenfügen der Abstand zwischen dem Schleiferträger (1) und der Leiterplatte (3) genau einjustiert werden. Zur näheren Erläuterung sind das zusammenzufügende Gehäuseteil (5) und der Gehäusedeckel (7) in der Figur 3 in einer Schnittzeichnung dargestellt.

Hierin ist erkennbar, daß nach dem Zusammenfügen die Seite der Leiterplatte (3), welche die Widerstandsbahnen trägt, genau in der Bezugsebene (E) liegt, welche ja durch die ( in der Figur 3 nicht dargestellten ) Anformungen ( siehe Figur 1 Bezugszeichen 8 ) ausgebildet wird.

Um den Schleiferträger (1) unbeachtlich möglicher Bauteiletoleranzen bezüglich der Widerstandsbahnen möglichst exakt zu positionieren, wird der Abstand (A) zwischen einer am Verbindungselement (9a) vorhandenen Fläche (13) und der Bezugsebene (E) noch vor dem Zusammenfügen von Gehäuseteil (5) und Gehäusedeckel (7) einjustiert. Um diesen Abstand (A) genau einzustellen wird das Verbindungselement (9a) des Schleiferträgers (1) auf das mit der Welle (2) verbundene Verbindungselement (9b) unter Benutzung einer Abstandsmessvorrichtung soweit aufgedrückt, bis der vorgegebene Abstand (A) genau erreicht ist.

Als Abstandsmeßvorrichtung kann dabei vorteilhafterweise eine mechanische Abstandslehre ( nicht dargestellt ) vorgesehen werden, welche auf die Anformungen (8) ( siehe Figur 1) des Gehäuseteils (5) aufgesetzt wird und dabei die Fläche (13) des Verbindungselementes (9a) genau um den Wert des vorgegebenen Abstandes (A) unter die Bezugsfläche (E) drückt.

Der Abstand (A) kann auch durch eine auf die Bezugsfläche (E) aufgesetzte Vorrichtung eingestellt werden, die gegenüber der Bezugsfläche (E) erhöht angeordnete Kontaktelemente aufweist, die durch die Schleiffedern (14) elektrisch miteinander verbunden werden. Diese elektrische Verbindung wird unterbrochen, wenn beim Aufdrücken des Verbindungselementes (9a) auf das Verbindungselement (9b) der Schleiferträger (1) seine Sollposition erreicht. Bei diesem Justierverfahren wird die Position der Schleiffedern (14) bei der Einstellung des Abstandes (A) berücksichtigt.

Nach dem der Schleiferträger (1) so in eine für die Kontaktgabe zwischen den Schleiffedern (14) und den Widerstandsbahnen (4) ideale Position einjustiert ist, werden der Gehäusedeckel (7) und das Gehäuseteil (5) miteinander verschraubt. Um eine nachträgliche Verschiebung des Schleiferträgers (1) aus der einjustierten Position zu verhindern, weist das Verbindungselement (9a) Hinterschnitte (12) auf, die sich in das Material des Verbindungselementes (9b) eindrücken, und so den Schleiferträger in axialer Richtung der Welle sichern. Eine Verbindung des Schleiferträgers (1) wäre somit nur durch eine hohe Krafteinwirkung in axialer Richtung zu erreichen, die aber in normalen Betrieb des Widerstandsdrehsensors nicht vorkommt.

### Bezugszeichenliste

- 1: Schleiferträger
- 2: Welle
- 3: Leiterplatte
- 4: Widerstandsbahnen
- 5: Gehäuseteil
- 6: Umlaufender Rand
- 7: Gehäusedeckel ( weiteres Gehäuseteil )
- 8: Anformungen
- 9a,9b: Verbindungselemente
- 10: Nocken
- 11: Nuten
- 12: Hinterschnitte
- 13: Fläche ( des Schleiferträgers )
- 14: Schleiffedern
- 15: Haltestifte
- 16: Flachsteckverbinder
- 17: Kontaktfedern
- A: ( vorgegebenes ) Abstandsmaß
- E: Bezugsebene

## Patentansprüche

1. Widerstandsdrehsensor mit einem Schleiferträger (1), der auf den Endabschnitt einer Welle aufgedrückt ist, mit einer Leiterplatte (3), auf der Widerstandsbahnen (4) aufgebracht sind, und die dem Schleiferträger (1) gegenüber angeordnet ist, und mit einem Gehäuseteil (5), welches eine Bezugsebene (E) ausbildet, auf der die Leiterplatte (3) aufliegt, **dadurch gekennzeichnet, daß** sowohl der Schleiferträger (1) als auch die Welle (2) jeweils ein Verbindungselement (9a,9b) aufweisen, welche durch Ineinanderdrücken verbindbar sind und die in axialer Richtung der Welle (2) zueinander positionierbar sind, so daß der Abstand (A) zwischen dem Schleiferträger (1) und der Bezugsebene (E) durch das Aufdrücken des Schleiferträgers (1) auf den Endabschnitt der Welle (2) in axialer Richtung justierbar ist.

2. Widerstandsdrehsensor nach Anspruch 1, **dadurch gekennzeichnet, daß** die Leiterplatte (3) zwischen dem Gehäuseteil (5), welches die Bezugsebene (E) ausbildet, und einem weiteren Gehäuseteil (Gehäusedeckel 7) klemmend gehalten wird.

3. Widerstandsdrehsensor nach Anspruch (1), **dadurch gekennzeichnet, daß** die Bezugsebene (E) durch Anformungen (8) an dem Gehäuseteil (5) ausgebildet wird.

4. Widerstandsdrehsensor nach Anspruch 1, **dadurch gekennzeichnet, daß** die Verbindungselemente (9a,9b) in radialer Richtung Nocken (10) und Nuten (11) aufweisen und daß eines der Verbindungselemente (9a) zusätzlich Hinterschnitte (12) aufweist, welche sich in das weichere Material des anderen Verbindungselementes (9b) zur formschlüssigen Sicherung der Verbindungselemente (9a,9b) eindrückt.

5. Verfahren zur Justierung eines Widerstandsdrehsensors nach Anspruch 1, **dadurch gekennzeichnet, daß** zur Justierung eine Abstandsmeßvorrichtung auf die Bezugsebene (E) aufgesetzt wird, welche den Abstand zwischen der Bezugsebene (E) und einer Fläche (13) des Schleiferträgers (1) erfaßt, und daß der Schleiferträger (1) soweit auf den Endabschnitt der Welle (1) aufgedrückt wird, bis die Abstandsmeßvorrichtung das vorgegebene Abstandsmaß (A) registriert.

6. Verfahren nach Anspruch 5, **dadurch gekennzeichnet, daß** die Abstandsmeßvorrichtung den Abstand (A) zwischen der Bezugsebene (E) zu den Schleiffedern (14) des Schleiferträgers (1) erfaßt, in dem diese das Auftreten oder den Wegfall eines durch die Schleiffedern (14) vermittelten Stromflusses registriert.

7. Verfahren nach Anspruch 5, **dadurch gekennzeichnet, daß** als Abstandsmeßvorrichtung und Justiervorrichtung eine mechanische Abstandslehre vorgesehen ist.

## Claims

1. A resistance-based rotation sensor comprising a sliding contact carrier (1) which is pressed on to the end section of a spindle, comprising a printed board (3) on which resistance tracks (4) are provided and which is disposed opposite the sliding contact carrier (1), and comprising a housing part (5) which forms a reference plane (E) on which the printed board (3) rests, **characterised in that** both the sliding contact carrier (1) and the spindle (2) each comprise a connection element (9a, 9b), which connection elements can be connected by pressing them into each other and which can be positioned in relation to each other in the axial direction of the spindle (2) so that the distance (A) between the sliding contact carrier (1) and the reference plane (E) can be adjusted by pressing the sliding contact carrier (1) axially on to the end section of the spindle (2).

2. A resistance-based rotation sensor according to claim 1, **characterised in that** the printed board (3) is held clamped between the housing part (5) which forms the reference plane (E) and a further housing part (housing cover 7).

3. A resistance-based rotation sensor according to claim 1, **characterised in that** the reference plane (E) is formed by integral formations (8) on the housing part (5).

4. A resistance-based rotation sensor according to claim 1, **characterised in that** the connection elements (9a, 9b) comprise radial tongues (10) and grooves (11), and that one of the connection elements (9a) additionally comprises undercuts (12) which are pressed into the softer material of the other connection element (9b) in order to secure the connection elements (9a, 9b) with a positive fit.

5. A method of adjusting a resistance-based rotation sensor according to claim 1, **characterised in that** in order to make an adjustment a distance measuring device, which determines the distance between the reference plane (E) and a face (13) of the sliding contact carrier (1), is placed on the reference plane (E), and that the sliding contact carrier (1) is pressed on to the end section of the spindle (1) until the distance measuring device records the predetermined distance (A).

6. A method according to claim 5, **characterised in that** the distance measuring device determines the distance (A) between the reference plane (E) and the sliding contact springs (14) of the sliding contact carrier (1) by a recording the presence or absence of a current flow which is communicated by the sliding contact springs (14).

7. A method according to claim 5, **characterised in that** a mechanical distance gauge is provided as a distance measuring device and as an adjusting device.

## Revendications

1. Détecteur rotatif de résistance comportant un support de curseur (1), qui est serré sur la section d'extrémité d'un arbre, comportant une plaquette à circuits imprimés (3), sur laquelle sont montées des voies résistives (4) et qui est disposée en vis-à-vis du support de curseur (1), et une partie de boîtier (5), qui définit un plan de référence (E), dans laquelle est disposé la plaquette à circuits imprimés (3), **caractérisé en ce qu'**aussi bien le support de curseur (1) que l'arbre (2) possèdent chacun un élément de liaison (9a, 9b), ces éléments de liaison pouvant être reliés par serrage l'un dans l'autre et pouvant être positionnés l'un par rapport à l'autre dans la direction axiale de l'arbre (2) de sorte que la distance (A) entre le support de curseur (1) et le plan de référence (E) peut être ajustée dans la direction axiale au moyen du serrage du support de curseur (1) sur la section d'extrémité de l'arbre (2).

2. Détecteur rotatif de résistance selon la revendication 1, **caractérisé en ce que** la plaquette à circuits imprimés (3) est retenue à l'état serré entre la partie de boîtier (5), qui définit le plan de référence (E), et une autre partie de boîtier, (couvercle de boîtier 7).

3. Détecteur rotatif de résistance selon la revendication 1, **caractérisé en ce que** le plan de référence (E) est défini par des parties conformées (8) situées sur la partie de boîtier (5).

4. Détecteur rotatif de résistance selon la revendication 1 **caractérisé en ce que** les éléments de liaison (9a, 9b) possèdent, dans la direction radiale, des ergots (10) et des rainures (11) et l'un des éléments de liaison (9a) possède en outre des sections en contre-dépouille (12), qui s'enfoncent dans le matériau mou de l'autre élément de liaison (9b) pour réaliser un blocage par formes complémentaires des éléments de liaison (9a, 9b).

5. Procédé pour ajuster un détecteur rotatif de résistance selon la revendication 1, **caractérisé en ce que** pour l'ajustement, on place dans le plan de référence (E) un dispositif de mesure de distance, qui détecte la distance entre le plan de référence (E) et une surface (13) du support de curseur (1) et que le support de curseur (1) est serré sur la section d'extrémité de l'arbre (2) jusqu'à ce que le dispositif de mesure de distance enregistre la valeur de distance prédéterminée (A).

6. Procédé selon la revendication 5, **caractérisé en ce que** le dispositif de mesure de distance mesure la distance (A) entre le plan de référence (E) et les ressorts frotteur (14) du support de curseur (1), par le fait que ce dispositif enregistre l'apparition ou la suppression d'un flux de courant transmis par l'intermédiaire des ressorts frotteurs (14).

7. Procédé selon la revendication 5, **caractérisé en ce qu'**il est prévu comme dispositif de mesure de distance et comme dispositif d'ajustement, un gabarit d'entretoisement mécanique.
